# EUROPÄISCHE PATENTANMELDUNG

(11) **EP 0 867 650 A1**
(43) Veröffentlichungstag der Anmeldung: **30.09.1998**
(21) Anmeldenummer: 98101876.5
(22) Anmeldetag: 04.02.1998
(51) Int. Cl.: F16L 17/025

(54) **Dichtring für Steckmuffenverbindungen**

(30) Priorität: 29.03.1997 DE 19713329
(71) Anmelder: Bode GmbH, D-22549 Hamburg (DE)
(72) Erfinder: Bode, Michael, Dipl.-Ing., 22609 Hamburg (DE)
(74) Vertreter: Klickow, Hans-Henning

(57) **Zusammenfassung**

Der Dichtring dient für Steckmuffenverbindungen und ist für eine Abdichtung von rohrförmigen Körpern vorgesehen. Der Dichtring ist aus einem Elastomer ausgebildet und weist einen Basisschenkel (1), einen Seitenschenkel (2) sowie eine Dichtlippe (3) auf, die gemeinsam eine Nut (5) begrenzen. Die Nut (5) ist zur Aufnahme eines Versteifungsringes (6) vorgesehen. Die Dichtlippe (3) ist von einem Lippensockel (4) in den Basisschenkel (1) übergeleitet. Unter einem Neigungswinkel (15) verläuft die Dichtlippe (3) schräg zum Lippensockel (4). Ein Überleitungsbereich der Dichtlippe (3) in den Lippensockel (4) weist von einer Außenseite des Basisschenkels (1) einen Abstand auf, der geringer als eine Tiefe einer den Dichtring aufnehmenden Sicke (11) der Steckmuffenverbindung ausgebildet ist.

## Beschreibung

Die Erfindung betrifft einen Dichtring für Steckmuffenverbindungen im Bereich von rohrförmigen Körpern, der aus mindestens einem Elastomer ausgebildet ist und der einen Basisschenkel, einen Seitenschenkel sowie eine Dichtlippe aufweist, die gemeinsam eine Nut begrenzen, die zur Aufnahme eines Versteifungsringes vorgesehen ist.

Derartige Dichtringe werden in vielfältigen Anwendungen zur Abdichtung von Steckmuffenverbindungen eingesetzt, die im Bereich von Rohrenden oder im Bereich von Enden von Fittingen angeordnet sind. Derartige Fittinge können beispielsweise als T-Stücke oder andersartige Abzweigelemente ausgebildet sein. In Abhängigkeit von der jeweils vorgesehenen Anwendung werden die Dichtringe mit unterschiedlichen Ausbildungen versehen. Insbesondere sind Lippendichtungen sowie Dichtungen mit gerundeten Querschnittflächen bekannt. Diese Dichtringe werden im Bereich eines muffenförmigen Endes in nutförmigen Vertiefungen bzw. Sicken gehaltert, die die Steckmuffe im wesentlichen konzentrisch im Bereich einer Innenwandung umgeben. Es ist aber auch möglich, die Sicken im Bereich einer äußeren Begrenzung der in die Muffe einsteckbaren Teile anzuordnen.

Ein derartiger Dichtring mit Versteifungsring wird beispielsweise in der DE-OS 42 05 278 beschrieben. Diese Dichtringe können jedoch noch nicht alle Anforderungen erfüllen, die an eine sichere Fixierung im Bereich der Sicke gestellt werden, wenn die Rohre oder die Fittinge zusammengeschoben werden.

Aufgabe der vorliegenden Erfindung ist es daher, einen Dichtring der einleitend genannten Art derart zu konstruieren, daß eine verbesserte Widerstandsfähigkeit im Hinblick auf eine Positionsbeibehaltung bei einwirkenden Schubkräften realisiert wird.

Diese Aufgabe wird erfindungsgemäß dadurch gelöst, daß die Dichtlippe von einem Lippensockel in den Basisschenkel übergeleitet ist, daß die Dichtlippe unter einem Neigungswinkel schräg zum Lippensockel verläuft und daß ein Überleitungsbereich der Dichtlippe in den Lippensockel von einer Außenseite des Basisschenkels einen Abstand aufweist, der geringer als eine Tiefe einer den Dichtring aufnehmenden Sicke der Steckmuffenverbindung ausgebildet ist.

Durch die geometrische Anordnung des Lippensockels und der Dichtlippe wird dafür gesorgt, daß bei einem Auftreffen eines einzuschiebenden Rohres die Dichtlippe schräg zu einem Rohrende orientiert ist und daß hierdurch die einwirkenden Schubkräfte im wesentlichen ein Wegschwenken der Dichtlippe bewirken und ein Verschieben des Dichtringes vermieden wird. Durch eine Vorgabe der Querschnittgestaltung der Dichtlippe kann ebenfalls dafür gesorgt werden, daß bei einem Einschieben des Rohres durch die Schrägstellung der Dichtlippe Druckkräfte in radialer Richtung auf den Versteifungsring und vom Versteifungsring auf das zwischen dem Versteifungsring und der Nut angeordnete Material des Dichtringes übertragen werden. Es werden hierdurch Kräfte generiert, die eine Fixierung des Dichtringes in der Nut unterstützen.

Eine verbesserte Fixierung des Versteifungsringes innerhalb der Nut kann dadurch hervorgerufen werden, daß der Seitenschenkel eine dem Basisschenkel angewandt angeordnete Endverdickung aufweist, die bereichsweise die Nut überkragt.

Eine vorteilhafte Dimensionierung besteht darin, daß der Versteifungsring eine Dicke aufweist, die etwa einer halben Tiefe der Nut entspricht.

Eine weitere Verbesserung des Sitzes des Dichtungsringes innerhalb der Sicke kann dadurch hervorgerufen werden, daß der Basisschenkel im Bereich seiner der Nut abgewandten Ausdehnung mindestens eine Außenprofilierung aufweist.

Als besonders vorteilhaft hat es sich herausgestellt, daß vier als Außenwölbungen ausgebildete Außenprofilierungen im Bereich des Basisschenkels angeordnet sind.

Eine Umleitung von in Längsrichtung wirkenden Verschiebekräften in Haltekräfte, die in radialer Richtung wirken, kann dadurch unterstützt werden, daß mindestens zwei der Außenprofilierungen unterschiedliche Dimensionierungen aufweisen.

Die Richtungstransformation der einwirkenden Kräfte kann auch dadurch unterstützt werden, daß der Neigungswinkel etwa 45° beträgt.

Zur Vermeidung eines Auftretens von Scherkräften wird vorgeschlagen, daß eine Sockellänge in radialer Richtung eine Ausdehnung aufweist, die etwa 50% bis 80% einer Tiefe der Sicke entspricht.

Besonders vorteilhaft im Hinblick auf die Entfaltung von Anpreßkräften innerhalb der Sicke hat es sich erwiesen, daß die Sockellänge etwa 70% der Tiefe der Sicke entspricht.

Zur Unterstützung einer Dichtwirkung nach einem Zusammenfügen des Rohres und der Steckmuffe wird vorgeschlagen, daß eine Kombination aus dem Lippensockel und der Dichtlippe in radialer Richtung eine größere Ausdehnung als der Seitenschenkel aufweist.

In der Zeichnung sind Ausführungsbeispiele der Erfindung schematisch dargestellt. Es zeigen:
- Fig. 1: Einen Querschnitt durch einen Dichtring mit schräggestellter Dichtlippe und Versteifungsring,
- Fig. 2: eine Ansicht des Dichtringes gemäß Fig. 1 entsprechend Blickrichtung II,
- Fig. 3: eine Seitenansicht des Dichtringes in Fig. 1 gemäß Blickrichtung III,
- Fig. 4: eine teilweise Darstellung eines Querschnittes des in eine Sicke eingesetzten Dichtringes,
- Fig. 5: eine Darstellung des Dichtringes gemäß Fig. 4 vor einem Kontakt mit einem einzuschiebenden Rohr und
- Fig. 6: eine Darstellung des Dichtringes gemäß Fig. 4 und Fig. 5 nach dem Beginn eines Verformungsvorganges durch ein einzuschiebendes Rohr.

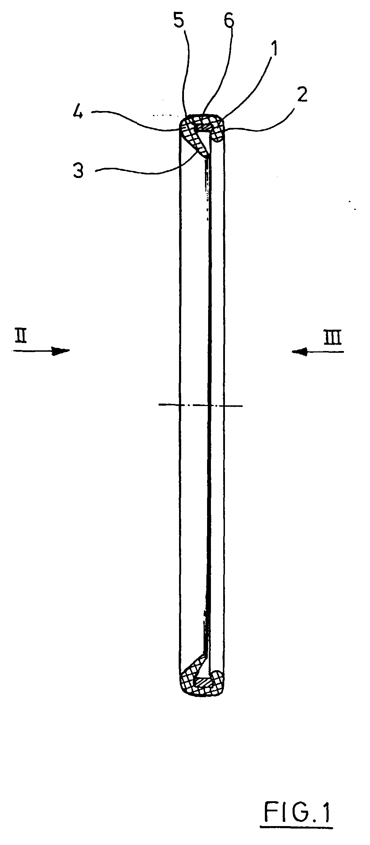

Aus der Querschnittdarstellung in Fig. 1 ist erkennbar, daß der Dichtring einen Basisschenkel (1), einen Seitenschenkel (2) sowie eine Dichtlippe (3) aufweist. Die Dichtlippe (3) ist von einem Lippensockel (4) in den Basisschenkel (1) übergeleitet. Der Basisschenkel (1), der Seitenschenkel (2) und der Lippensockel (4) begrenzen eine Nut (5), in die ein Versteifungsring (6) eingesetzt ist.

Als Material für den Dichtring wird ein Elastomer, beispielsweise Gummi, verwendet. Der Versteifungsring (6) besteht aus einem relativ zum Elastomer festeren Material, beispielsweise aus Polyethylen.

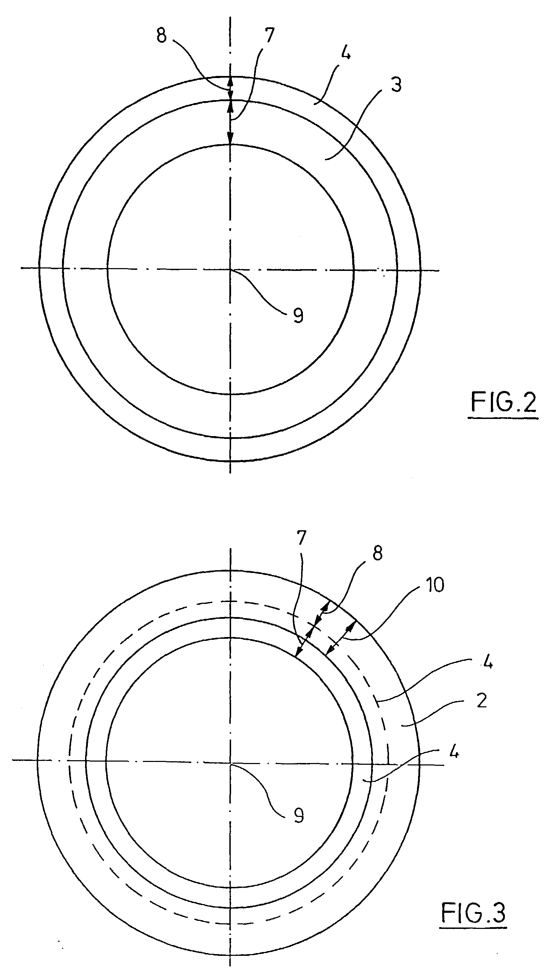

Aus Fig. 2 ist erkennbar, daß der Dichtring eine im wesentlichen kreisförmige Gestaltung aufweist. In radialer Richtung weist die Dichtlippe (3) eine Lippenausdehnung (7) auf, die größer als eine Sockellänge (8) des Lippensockels (4) in dieser Richtung dimensioniert ist.

Aus der Darstellung in Fig. 3 ist erkennbar, daß die Dichtlippe (3) in Richtung auf einen Dichtringmittelpunkt (9) eine größere Ausdehnung als der Seitenschenkel (2) aufweist. Ebenfalls ist erkennbar, daß der Lippensockel (4) in dieser Richtung eine geringere Dimensionierung einer Schenkellänge (10) besitzt.

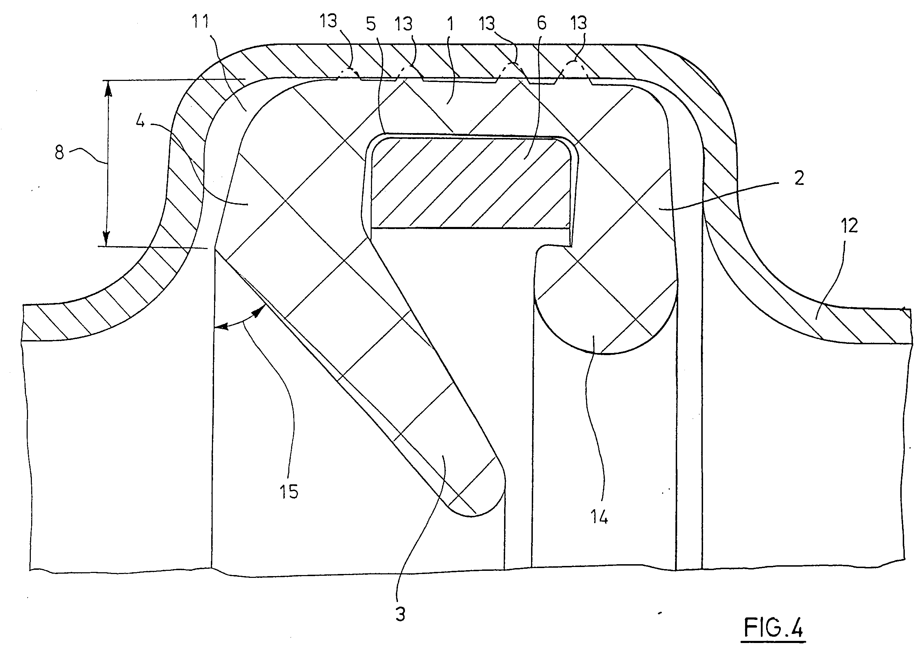

Fig. 4 veranschaulicht den Einbauzustand des Dichtringes mit Versteifungsring (6) in einer Sicke (11) einer Steckmuffe (12). Es ist erkennbar, daß der Basisschenkel (1) im Bereich seiner einer Wandung der Steckmuffe (12) zugewandten Ausdehnung mit Außenprofilierungen (13) versehen ist, die beabstandet zueinander in Umfangsrichtung des Dichtringes verlaufen. Beispielsweise ist es möglich, vier Außenprofilierungen (13) als Außenwölbungen vorzusehen, die unterschiedliche Dimensionierungen aufweisen. Insbesondere ist daran gedacht, ausgehend vom Lippensockel (4) in Richtung auf den Seitenschenkel (2) eine zunehmende Dimensionierung der Außenprofilierungen (13) vorzusehen.

Aus Fig. 4 ist ebenfalls erkennbar, daß der Seitenschenkel (2) in eine Endverdickung (14) einmündet, die dem Basisschenkel (1) abgewandt angeordnet ist. Die Endverdickung (14) überkragt in einem Bereich ihrer Ausdehnung die Nut (5) und sichert den Versteifungsring (6) in seiner Einbauposition.

Die Dichtlippe (3) verläuft mit einem Neigungswinkel (15) zum Lippensockel (4). Der Neigungswinkel (15) kann bevorzugt in einem Bereich von 30° bis 70° liegen. Eine typische Realisierung beträgt 45°. Die Sockellänge (8) ist derart bemessen, daß ein Übergangsbereich zwischen dem Lippensockel (4) und der Dichtlippe (3) innerhalb der Nut (5) liegt. Die Dimensionierung der Sockellänge (8) kann beispielsweise derart erfolgen, daß diese etwa zweidrittel der Tiefe der Nut (5) beträgt. Ein typischer Anordnungsbereich liegt in einem Intervall von 50% bis 80% der Nuttiefe.

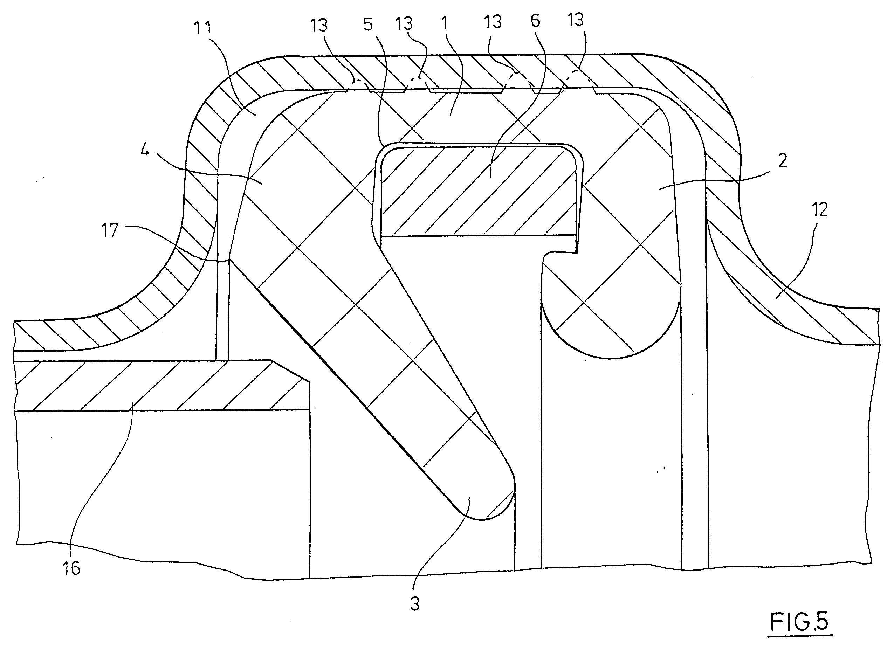

Fig. 5 zeigt eine zu Fig. 4 vergleichbare Darstellung nach einem Einführen eines Rohres (16) in die Steckmuffe (12). Bei dieser Anordnung ist jedoch noch kein Kontakt zwischen dem Rohr (16) und dem Dichtring erfolgt. Es ist jedoch erkennbar, daß das Rohr (16) bereits an einer vom Übergang des Lippensockels (4) in die Dichtlippe (3) ausgebildeten Ecke (17) vorbeigeführt ist und daß hierdurch sichergestellt wurde, daß das Rohr (16) nicht gegen einen seitlichen Bereich des Lippensockels (4) stoßen kann.

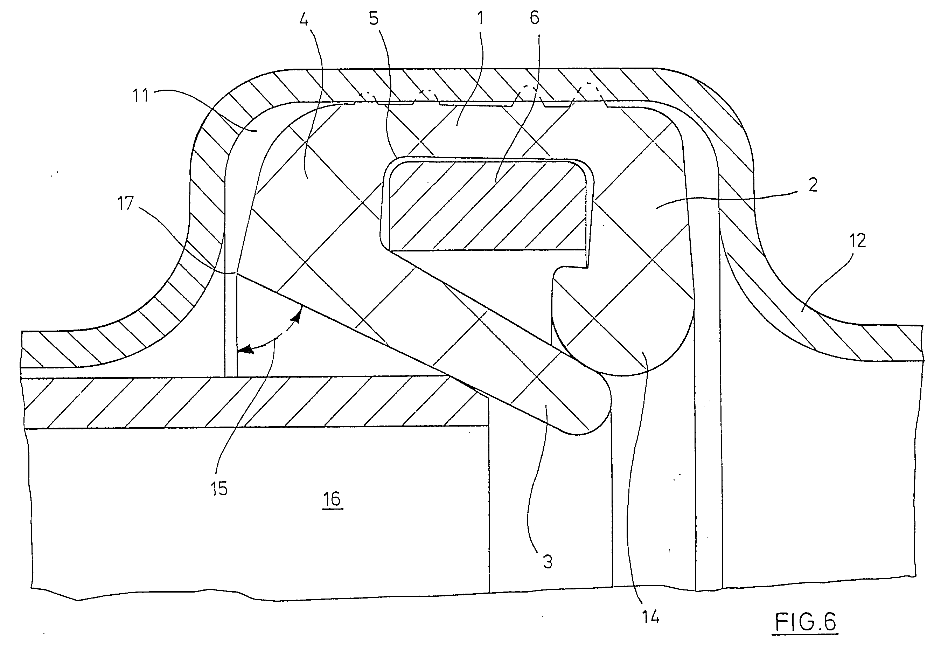

Fig. 6 veranschaulicht einen Montagezustand, bei dem der Neigungswinkel (15) bereits durch ein Verschwenken der Dichtlippe (3) infolge eines Kontaktes mit dem Rohr (16) vergrößert wurde. In dem dargestellten Zustand liegt die Dichtlippe (3) gerade an der Endverdickung (14) des Seitenschenkels (2) an. Ebenfalls drückt die Dichtlippe (3) bereits auf einen Eckbereich des Versteifungsringes (6), der durch diesen Druck seinerseits in radialer Richtung einen Anpreßdruck auf den Basisschenkel (1) ausübt. Es wird hierdurch eine Anpreßkraft erzeugt, die den Dichtring innerhalb der Sicke (11) sichert.

Bei einem weiteren Vorschieben des Rohres (16) beginnt eine elastische Verformung des Endbereiches der Dichtlippe (3), der Endverdickung (14) sowie des Seitenschenkels (2). Ebenfalls wird der Druck der Dichtlippe (3) auf den Versteifungsring (6) erheblich erhöht, so daß ein verstärktes Einpressen des Dichtringes in die Sicke (11) verursacht wird. Dieses Einpressen führt zu einer elastischen Verformung der Außenprofilierungen (13).

Eine wesentliche Eigenschaft des beschriebenen Dichtringes mit Versteifungsring (6) besteht somit darin, daß in Längsrichtung wirkende Verschiebekräfte durch Kraftumleitung in Anpreßkräfte umgesetzt werden, die in radialer Richtung wirken und durch ein Einpressen des Dichtringes in die Sicke (11) einer Verschiebung des Dichtringes entgegenwirken.

## Patentansprüche

1. Dichtring für Steckmuffenverbindungen im Bereich von rohrförmigen Körpern, der aus mindestens einem Elastomer ausgebildet ist und der einen Basisschenkel, einen Seitenschenkel sowie eine Dichtlippe aufweist, die gemeinsam eine Nut begrenzen, die zur Aufnahme eines Versteifungsringes vorgesehen ist, dadurch gekennzeichnet, daß die Dichtlippe (3) von einem Lippensockel (4) in den Basisschenkel (1) übergeleitet ist, daß die Dichtlippe (3) unter einem Neigungswinkel (15) schräg zum Lippensockel (4) verläuft und daß ein Übergangsbereich der Dichtlippe (3) in den Lippensockel (4) von einer Außenseite des Basisschenkels (1) einen Abstand aufweist, der geringer als eine Tiefe einer den Dichtring aufnehmenden Sicke (11) der Steckmuffenverbindung ausgebildet ist.

2. Dichtring nach Anspruch 1, dadurch gekennzeichnet, daß der Seitenschenkel (2) eine dem Basisschenkel (1) abgewandt angeordnete Endverdickung aufweist, die bereichsweise die Nut (5) überkragt.

3. Dichtring nach Anspruch 1 oder 2, dadurch gekennzeichnet, daß der Versteifungsring (6) eine Dicke aufweist, die etwa einer halben Tiefe der Nut (5) entspricht.

4. Dichtring nach einem der Ansprüche 1 bis 3, dadurch gekennzeichnet, daß der Basisschenkel (1) im Bereich seiner der Nut (5) abgewandten Ausdehnung mindestens eine Außenprofilierung (13) aufweist.

5. Dichtring nach Anspruch 4, dadurch gekennzeichnet, daß vier als Außenwölbungen ausgebildete Außenprofilierungen (13) im Bereich des Basisschenkels (1) angeordnet sind.

6. Dichtring nach Anspruch 4 oder 5, dadurch gekennzeichnet, daß mindestens zwei der Außenprofilierungen (13) unterschiedliche Dimensionierungen aufweisen.

7. Dichtring nach einem der Ansprüche 1 bis 6, dadurch gekennzeichnet, daß der Neigungswinkel (15) etwa 45° beträgt.

8. Dichtring nach einem der Ansprüche 1 bis 7, dadurch gekennzeichnet, daß eine Sockellänge (8) in radialer Richtung eine Ausdehnung aufweist, die etwa 50% bis 80% einer Tiefe der Sicke (11) entspricht.

9. Dichtring nach Anspruch 8, dadurch gekennzeichnet, daß die Sockellänge (8) etwa 70% der Tiefe der Sicke (11) entspricht.

10. Dichtring nach einem der Ansprüche 1 bis 9, dadurch gekennzeichnet, daß eine Kombination aus dem Lippensockel (4) und der Dichtlippe (3) in radialer Richtung eine größere Ausdehnung als der Seitenschenkel (2) aufweist.
